# EUROPÄISCHE PATENTSCHRIFT

(11) **EP 3 374 629 B1**
(45) Veröffentlichungstag und Bekanntmachung des Hinweises auf die Patenterteilung: **09.12.2020**
(21) Anmeldenummer: 16788425.3
(22) Anmeldetag: 07.10.2016
(51) Int. Cl.: F03D 9/25, F03D 80/80, H02G 3/30

(54) **FÜHRUNGSVORRICHTUNG FÜR STRANGFÖRMIGE BAUTEILE, WIE ENERGIE- UND/ODER INFORMATIONSFÜHRENDE KABEL VON WINDKRAFTANLAGEN**
GUIDING DEVICE FOR STRAND-SHAPED COMPONENTS, SUCH AS ENERGY- AND/OR INFORMATION-CONDUCTING CABLES OF WIND TURBINES
DISPOSITIF DE GUIDAGE POUR COMPOSANTS DE FORME ALLONGÉE, TELS QUE DES CÂBLES D'ACHEMINEMENT D'ÉNERGIE ET/OU D'INFORMATIONS D'ÉOLIENNES

(30) Priorität: 11.11.2015 DE 102015014563
(43) Veröffentlichungstag der Anmeldung: 19.09.2018
(73) Patentinhaber: Hydac International GmbH, 66280 Sulzbach/Saar (DE)
(72) Erfinder: MARYNIOK, Peter, 66693 Mettlach (DE)
(74) Vertreter: Bartels, Martin Erich Arthur
(86) Internationale Anmeldenummer: PCT/EP2016/001670
(87) Internationale Veröffentlichungsnummer: WO 2017/080628

(56) Entgegenhaltungen:
- EP-A1- 2 762 723
- WO-A1-2004/099609
- CN-U- 202 034 719
- DE-A1-102010 008 639

## Beschreibung

Die Erfindung betrifft eine Führungsvorrichtung für strangförmige Bauteile, wie energie- und/oder informationsführende Kabel von Windkraftanlagen, mit den Merkmalen im Oberbegriff von Anspruch 1.

Um die in Windkraftanlagen erzeugten Energien abzuführen sowie für andere betriebliche Zwecke, wie Steuerung, Überwachung und dergleichen, müssen Kabel, die vom Maschinenhaus durch den Turm nach unten verlaufen, so geführt werden, dass bei betrieblichen Bewegungen der Kabel, die als Kabelbündel vom Maschinenhaus in den Turm herabhängen, keine Beschädigungen oder Beeinträchtigungen der Kabel stattfinden. Da bei den üblichen Windkraftanlagen das Maschinenhaus mit der Generatoreinheit, von der das Kabelbündel ausgehend in den Turm herabhängt, im Betrieb mehrere Umdrehungen ausführen kann, bevor das Maschinenhaus zurückgesteuert wird, muss das Kabelbündel so geführt werden, dass die Kabel in dem in den Turm hängenden Kabelbündel die Bewegung zwar mitmachen können, dass dabei jedoch kein ungeordnetes Knäuel gebildet wird, in dem die Kabel derart aneinander scheuern, dass Beschädigungen der Isolation zu befürchten wären.

Hierfür ist es Stand der Technik, vgl. WO 2010/108538 A1, die vom Maschinenhaus herabhängenden Kabel durch eine Reihe aufeinanderfolgender Führungsteile zu führen, die als Abstandhalter, sog. Spacer, die Kabel voneinander distanziert führen, wobei das unterste Führungsteil, auch Fixstern oder Bottom-Spacer genannt, undrehbar an einem betreffenden Turmsegment festgelegt ist.

Die Fixierung des untersten, am zugehörigen Turmsegment festzulegenden Führungsteils gestaltet sich bei bereits installierten Anlagen schwierig. Eine Schweißverbindung als Festlegeeinrichtung ist wegen der Korrosionsgefahr, die auf Dauer zu einer Beeinträchtigung der Strukturfestigkeit des Turmsegments führt, äußerst nachteilig und aus Sicherheitsgründen nicht erlaubt. Entsprechendes gilt für eine Befestigung durch spanenden Eingriff in den Turmwerkstoff.

Die WO 2004/099609 A1 beschreibt eine Führungsvorrichtung für strangförmige Bauteile, wie energie- und/oder informationsführende Kabel von Windkraftanlagen, mit den Merkmalen im Oberbegriff von Anspruch 1 bestehend aus mindestens einem Führungsteil für eine teilweise Aufnahme der Bauteile, wobei mindestens dieses eine Führungsteil mittels einer Festlegeeinrichtung an einem Turmsegment der Anlage fixierbar ist, wobei die Festlegeeinrichtung mittels einer Anhafteinrichtung, vorzugweise in wieder lösbarer Weise, die Fixierung des zugehörigen Führungsteils vornimmt, wobei die Anhafteinrichtung aus mit bogenförmiger Krümmung verlaufenden Einzelsegmenten besteht, deren jeweiliger Krümmungsverlauf dem Krümmungsverlauf der Innenwand des zuordenbaren Turmsegments der Anlage nachfolgt, wobei jedes Einzelsegment eine Vielzahl einzelner Permanentmagnete aufweist, die mittels einer gemeinsamen Handhabe auf das Turmsegment aufsetzbar und von dort wieder abnehmbar sind.

Weitere Führungseinrichtungen gehen aus der EP 2 762 723 A1, der DE 10 2010 008 639 A1 und der CN 202034719 U hervor.

Im Hinblick auf diese Problematik stellt sich die Erfindung die Aufgabe, eine Führungsvorrichtung zur Verfügung zu stellen, deren Festlegeeinrichtung eine sichere Verbindung des festzulegenden Führungsteils ohne Gefährdung der Turmstruktur ermöglicht.

Gemäß dem Patentanspruch 1 sieht die Erfindung zur Lösung dieser Aufgabe bei einer Führungsvorrichtung der eingangs genannten Art vor, dass ein Band beidseits der Aufeinanderfolge der Permanentmagnete seitlich vorsteht und dadurch die Handhabe bildet, die ergreifbar ist, um für eine Demontage das Einzelsegment aus der haftenden Position abzulösen, indem die Permanentmagnete nacheinander aus der Normalposition, in der sie mit starker Haftkraft am Turmsegment anliegen, heraus gekippt werden.

Die Anhafteinrichtung besteht aus mit bogenförmiger Krümmung verlaufenden Einzelsegmenten, deren jeweiliger Krümmungsverlauf dem Krümmungsverlauf der Innenwand des zuordenbaren Turmsegments der Anlage nachfolgt. Dadurch wird eine besonders starke Haftkraft erreicht.

Jedes Einzelsegment weist eine Vielzahl einzelner Permanentmagnete auf, die mittels der gemeinsamen Handhabe auf das Turmsegment aufsetzbar und von dort wieder abnehmbar sind. Montage und Demontage der Führungsvorrichtung sind dadurch einfach durchführbar.

Es ist ferner vorgesehen, dass die Festlegeeinrichtung mittels einer Anhafteinrichtung, vorzugsweise in wieder lösbarer Weise, die Fixierung des zugehörigen Führungsteils vornimmt. Bei Benutzung einer ohne Eingriff in die Werkstoffstruktur des Turmsegments wirksamen Festlegeeinrichtung, die mittels Haftkraft wirkt, die beispielsweise durch Magnetkraft erzeugende Einrichtungen gebildet ist, ist eine für die Turmstruktur unschädliche Festlegung realisierbar.

Die Anhafteinrichtung wieder lösbar ausgestaltet ermöglicht das Entfernen des Führungsteils aus seiner Betriebsstellung. Wartungsarbeiten oder Erweiterungen der Anlage lassen sich dadurch bei gelöster Festlegeeinrichtung einfach und bequem durchführen.

Die Anhafteinrichtung weist mindestens eine magnetfelderzeugende Festlegekomponente, wie einen Permanentmagneten, auf, die mit einem magnetanziehenden Werkstoff, wie einem Stahlwerkstoff, des zuordenbaren Turmsegments der Anlage zusammenwirkt. Bei Verwendung von Permanentmagneten arbeitet die Festlegeeinrichtung, ohne dass eine Betätigung oder Energiezufuhr von außen erforderlich wäre, autark. Insbesondere wenn der Stahlwerkstoff des Turmsegmentes aus Korrosionsschutzgründen eine Farb-Schutzschicht aufweist, lässt sich die magnetfelderzeugende Festlegekomponente, vorzugsweise in Form eines Permanentmagneten, anbringen und auch im Bedarfsfall wieder entfernen, ohne dass die Schutzschicht beschädigt wird.

Vorteilhafterweise kann die Anhafteinrichtung mindestens eine Kompensatoreinrichtung aufweisen, die axiale und/oder radiale Ausgleichsbewegungen des Führungsteils in einem vorgebbaren Bereich zulässt. Dadurch ist eine besonders schonende Führung des Kabelbündels sichergestellt, und etwaige Schwingungen des Kabelbündels sind aufgefangen.

In vorteilhafter Weise kann die Kompensatoreinrichtung eine Vielzahl von Zugfedern aufweisen, die mit ihrem einen freien Ende an der Handhabe der Permanentmagnete eines Einzelsegments und mit ihrem anderen freien Ende an einem gemeinsamen Anlenkschemel angelenkt sind, der die gemeinsame Zugkraft auf ein Anlenkseil überträgt, an dem das eine zuordenbare Führungsteil angeordnet ist. Die Benutzung eines Anlenkseils zur Übertragung der Haltekraft ermöglicht eine leichtgewichtige Bauweise der Führungsvorrichtung.

Mit besonderem Vorteil können drei in in Umfangsrichtung des Turmsegments gemessenem Abstand zueinander angeordnete Einzelsegmente das Führungsteil in dessen Betriebszustand im Turmsegment der Anlage tragen.

Bei besonders vorteilhaften Ausführungsbeispielen der Führungsvorrichtung sind neben dem einen mittels der Festlegeeinrichtung festlegbaren Führungsteil die weiteren Führungsteile zwischen diesem Führungsteil und einer schwenkbaren Gondel der Windkraftanlage angeordnet, wobei die weiteren Führungsteile in der Art von Kabel-Schellenkörpern ausgebildet sind. Diese können in an sich bekannter Form ausgebildet sein, wie es zum Beispiel in Fig. 1 bis 6 im Dokument DE 10 2010 032 687 A1 gezeigt ist. Der besondere Vorteil ist, dass bei installierten Anlagen diese Haltevorrichtung nachgerüstet werden kann.

In ebenfalls an sich bekannter Weise, vgl. WO 2010/108538, kann auf der der Gondel abgewandten Seite unterhalb des einen Führungsteils mit der wieder lösbaren Festlegeeinrichtung eine Schlaufenführung im Turm der Windkraftanlage zwecks Kabelnachführung stationär angeordnet sein.

Nachstehend ist die Erfindung anhand eines in der Zeichnung dargestellten Ausführungsbeispiels im Einzelnen erläutert. Es zeigen:
- Fig. 1: in stark schematisch vereinfachter, skizzenhafter Darstellung die Innenseite der an die Gondel (Maschinenhaus) angrenzenden Turmsegmente einer Windkraftanlage mit einem Ausführungsbeispiel der erfindungsgemäßen Führungsvorrichtung;
- Fig. 2: eine Draufsicht des an einem Turmsegment festgelegten Führungsteils des Ausführungsbeispiels der erfindungsgemäßen Führungsvorrichtung;
- Fig. 3: eine näherungsweise in natürlicher Größe einer praktischen Ausführungsform gezeichnete Draufsicht eines Einzelsegments der Festlegeeinrichtung des Ausführungsbeispiels der erfindungsgemäßen Führungsvorrichtung; und
- Fig. 4 und 5: in gegenüber Fig. 3 vergrößerter Darstellung eine Seitenansicht bzw. Stirnansicht eines einzelnen Permanentmagneten des Einzelsegments von Fig. 3 mit zugehöriger Halterung.

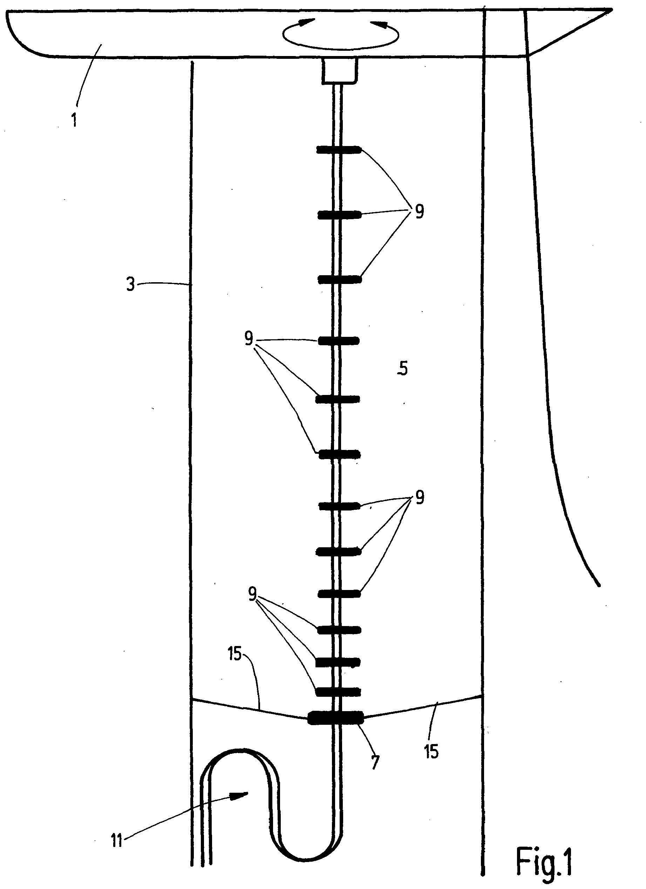

Die Fig. 1 zeigt von einer Windkraftanlage den an die Gondel 1 (Maschinenhaus) angrenzenden Bereich der oberen Turmsegmente 3 mit im Inneren befindlichem, von der Gondel 1 herabhängendem Kabelbündel 5. Dieses ist in dem Verlauf von der Gondel 1 bis zu einem mittels einer Festlegeeinrichtung undrehbar an einem zugeordneten Turmsegment 3 festgelegten untersten Führungsteil 7, einem sog. Fixstern oder Bottom-Spacer, durch eine Aufeinanderfolge frei drehbarer Führungsteile 9 geführt. Diese Führungsteile 9, ebenso wie das festgelegte Führungsteil 7, führen als Abstandhalter in an sich bekannter Weise das Kabelbündel 5 in der Weise, dass die Einzelkabel voneinander geordnet distanziert sind. Für den Längenausgleich, der bei einer Verdrehung des Bündels 5 bei den Drehbewegungen der Gondel 1 erforderlich ist, weil sich das unverdrehte Bündel 5 bei Verdrehung verkürzt, sind die Einzelkabel im festgelegten untersten Führungsteil 7 axial bewegbar geführt. Hierfür kann dieses Führungsteil 7 so gestaltet sein, wie es in dem Dokument WO 2014/053230 A1 beispielsweise in Fig. 7 bis 10 für derartige Führungsteile offenbart ist. Unterhalb dieses Führungsteils 7 ist für den erforderlichen Längenausgleich eine bei derartigen Anlagen zwecks Kabelnachführung stationär im Turm angeordnete Schlaufenführung 11 vorhanden, deren Einzelheiten in Fig. 1 nicht dargestellt sind.

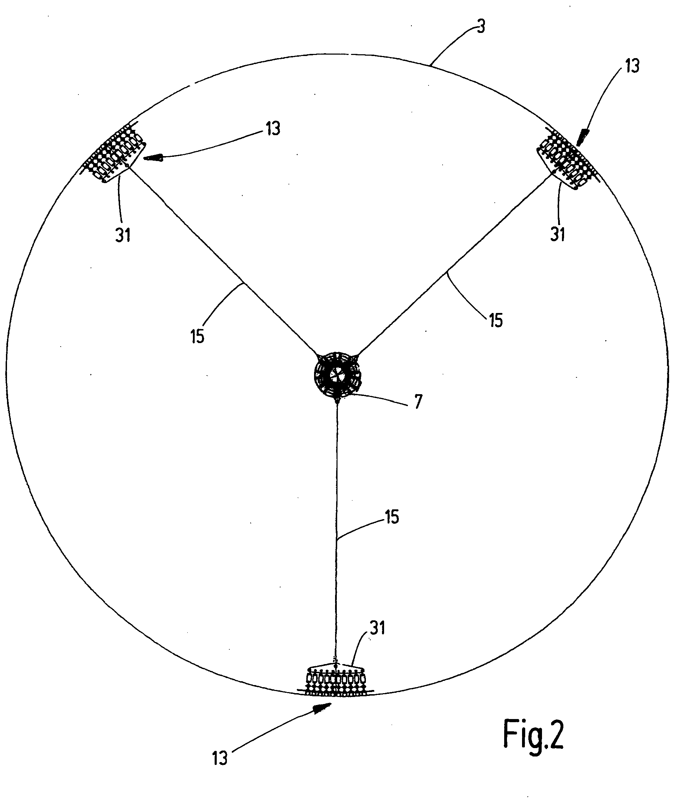

Nähere Einzelheiten der bei der erfindungsgemäßen Führungsvorrichtung vorgesehenen Festlegeeinrichtung zur Verankerung des untersten Führungsteils 7 am betreffenden Turmsegment 3 sind in den Fig. 2 bis 5 dargestellt.

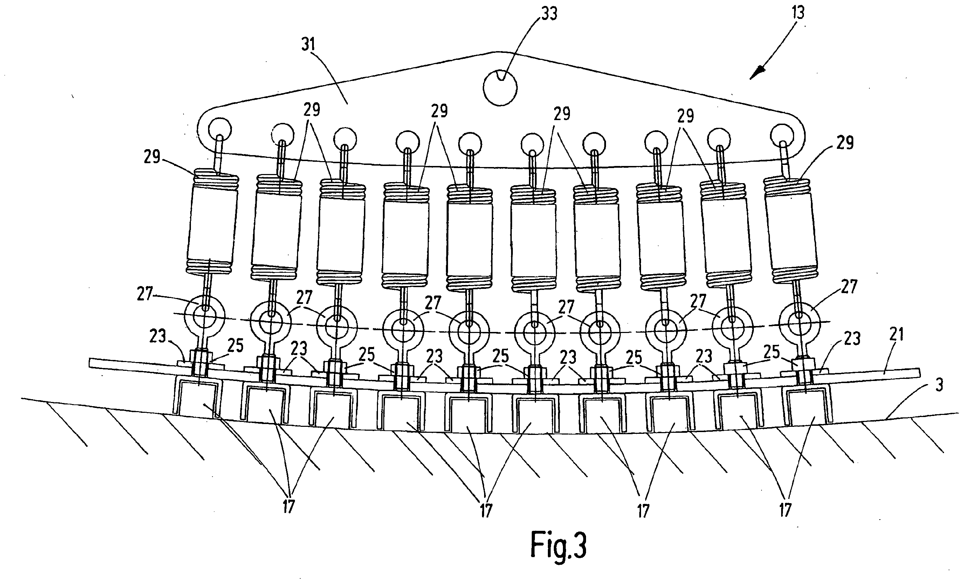

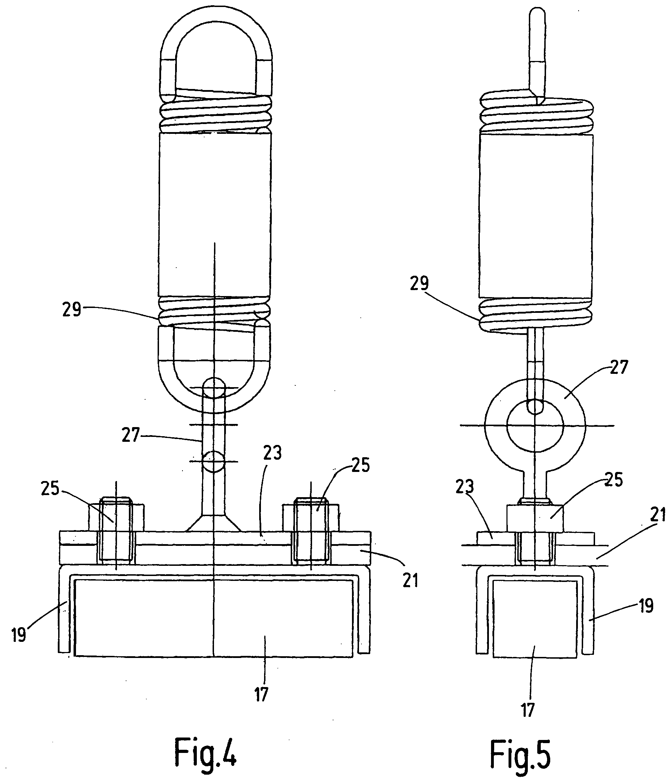

Wie Fig. 2 zeigt, weist die Festlegeeinrichtung drei Einzelsegmente 13 auf, die in Umfangsrichtung des Turmsegments 3 gemessenem Abstand voneinander an der Innenwand des Turmsegments 3 anhaften. Jedes Einzelsegment 13 ist über ein Zugseil 15 mit dem Führungsteil 7 verbunden. Während die Fig. 2 ein Beispiel der Anordnung der Einzelsegmente 13 zeigt, bei dem zwei der Einzelsegmente 13 zueinander in einem Winkelabstand von 90° angeordnet sind und das übrige Einzelsegment 13 zu diesen jeweils einen größeren Winkelabstand besitzt, versteht sich, dass alle Einzelsegmente 13 in gleichem Winkelabstand von 120° zueinander angeordnet sein können. Die Fig. 3 zeigt eines der Einzelsegmente 13 in gesonderter Darstellung. Wie Fig. 3 zeigt, weist jedes Segment 13 zehn Permanentmagnete 17 auf, die in geringem Abstand voneinander in Aufeinanderfolge mit ihrem Magnetgehäuse 19 (Fig. 4 und 5) mit einem Metallband 21 verschweißt sind. Mit dem Band 21 folgt die Reihe der Magnete 17 dem Krümmungsverlauf der Innenwand des Turmsegments 3. In Ausrichtung auf jeden Magneten 17 ist an dem Band 21 eine Halteplatte 23 mittels Schrauben 25 angebracht, und im mittleren Bereich der Halteplatten 23 ist an diesen eine Halteöse 27 angeschweißt. In jede der Halteösen 27 ist ein Ende einer Zugfeder 29 eingehängt. Das andere Ende der Zugfedern 29 ist an einem Anlenkschemel 31 angelenkt. Dieser hat die Form einer Metallplatte in Form eines schmalen Dreiecks, das sich über die gesamte Reihenanordnung der Zugfedern 29 erstreckt. Im Zentralbereich bildet der Anlenkschemel 31 die Anlenkstelle 33 für die Verbindung mit dem zugehörigen Zugseil 15. In dieser Anordnung bilden die Zugfedern 29 in Zusammenwirkung mit dem Anlenkschemel 31 eine Kompensatoreinrichtung, die die zwischen Zugseil 15 und der Innenwand des Turmsegments 3 wirkende Haltekraft gleichmäßig auf jeden Permanentmagneten 17 überträgt. Das Band 21 steht beidseits der Aufeinanderfolge der Magnete 17 seitlich vor und bildet dadurch eine Handhabe, die ergreifbar ist, um für eine Demontage das Segment 13 aus der haftenden Position abzulösen, indem die Magnete 17 nacheinander aus der Normalposition, in der sie mit starker Haftkraft am Turmsegment 3 anliegen, heraus gekippt werden.

Wie der Vergleich der Fig. 4 und 5 zeigt, besitzen die Magnete 17 eine rechteckförmige Quaderform, bei der die in Fig. 4 sichtbare Langseite mehr als die doppelte Länge der Breite der Stirnseite hat, die in den Fig. 3 und 5 sichtbar ist. Am Band 21 sind die Magnete 17 in einem Abstand angeordnet, der etwas kürzer als die Breite der Stirnseite ist. Bei der durch die Zugfedern 29 zur Verfügung gestellten Nachgiebigkeit der Kompensatoreinrichtung der Einzelsegmente 13 lässt die Festlegeeinrichtung für das unterste Führungsteil 7, obgleich es im Wesentlichen undrehbar gehalten ist, geringfügige axiale und/oder radiale Ausgleichsbewegungen zu, durch die im Betrieb möglicherweise ruckartig auftretende Querkräfte zwischen Bündel 5 und Führungsteil 7 gemildert werden, so dass eine besonders schonende Kabelführung gewährleistet ist.

## Patentansprüche

1. Führungsvorrichtung für strangförmige Bauteile, wie energie- und/oder informationsführende Kabel (5) von Windkraftanlagen (1, 3), bestehend aus mindestens einem Führungsteil (7) für eine teilweise Aufnahme der Bauteile, wobei mindestens dieses eine Führungsteil (7) mittels einer Festlegeeinrichtung (13, 15) an einem Turmsegment (3) der Anlage (1, 3) fixierbar ist, wobei die Festlegeeinrichtung mittels einer Anhafteinrichtung (13), vorzugweise in wieder lösbarer Weise, die Fixierung des zugehörigen Führungsteils (7) vornimmt, wobei die Anhafteinrichtung aus mit bogenförmiger Krümmung verlaufenden Einzelsegmenten (13) besteht, deren jeweiliger Krümmungsverlauf dem Krümmungsverlauf der Innenwand des zuordenbaren Turmsegments (3) der Anlage (1, 3) nachfolgt, wobei jedes Einzelsegment (13) eine Vielzahl einzelner Permanentmagnete (17) aufweist, die mittels einer gemeinsamen Handhabe (21) auf das Turmsegment (3) aufsetzbar und von dort wieder abnehmbar sind, **dadurch gekennzeichnet, dass** ein Band (21) beidseits der Aufeinanderfolge der Permanentmagnete (17) seitlich vorsteht und dadurch die Handhabe (21) bildet, die ergreifbar ist, um für eine Demontage das Einzelsegment (13) aus der haftenden Position abzulösen, indem die Permanentmagnete (17) nacheinander aus der Normalposition, in der sie mit starker Haftkraft am Turmsegment (3) anliegen, heraus gekippt werden.

2. Führungsvorrichtung nach Anspruch 1, **dadurch gekennzeichnet, dass** die Anhafteinrichtung (13) wieder lösbar ausgestaltet das Entfernen des Führungsteils (7) aus seiner Betriebsstellung ermöglicht.

3. Führungsvorrichtung nach Anspruch 1 oder 2, **dadurch gekennzeichnet, dass** die Anhafteinrichtung (13) mindestens eine magnetfelderzeugende Festlegekomponente, wie einen Permanentmagneten (17), aufweist, die mit einem magnetanziehenden Werkstoff, wie einem Stahlwerkstoff, des zuordenbaren Turmsegments (3) der Anlage (1, 3) zusammenwirkt.

4. Führungsvorrichtung nach einem der vorstehenden Ansprüche, **dadurch gekennzeichnet, dass** die Anhafteinrichtung (13) mindestens eine Kompensatoreinrichtung (29, 31) aufweist, die axiale und/oder radiale Ausgleichsbewegungen des Führungsteils (7) in einem vorgebbaren Bereich zulässt.

5. Führungsvorrichtung nach einem der vorstehenden Ansprüche, **dadurch gekennzeichnet, dass** die Kompensatoreinrichtung (29, 31) eine Vielzahl von Zugfedern (29) aufweist, die mit ihrem einen freien Ende an der Handhabe (21) der Permanentmagnete eines Einzelsegments (13) und mit ihrem anderen freien Ende an einem gemeinsamen Anlenkschemel (31) angelenkt sind, der die gemeinsame Zugkraft auf ein Anlenkseil (15) überträgt, an dem das eine zuordenbare Führungsteil (7) angeordnet ist.

6. Führungsvorrichtung nach einem der vorstehenden Ansprüche, **dadurch gekennzeichnet, dass** drei in in Umfangsrichtung des Turmsegments (3) gemessenem Abstand zueinander angeordnete Einzelsegmente (13) das Führungsteil (7) in dessen Betriebszustand im Turmsegment (3) der Anlage (1, 3) tragen.

7. Führungsvorrichtung nach einem der vorstehenden Ansprüche, **dadurch gekennzeichnet, dass** neben dem einen mittels der Festlegeeinrichtung (13, 15) festlegbaren Führungsteil (7) weitere Führungsteile (9) zwischen diesem Führungsteil (7) und einer schwenkbaren Gondel (3) der Windkraftanlage (1, 3) angeordnet sind und dass die weiteren Führungsteile (9) in der Art von Kabel-Schellenkörpern ausgebildet sind.

8. Führungsvorrichtung nach Anspruch 7, **dadurch gekennzeichnet, dass** auf der der Gondel (3) abgewandten Seite unterhalb des einen Führungsteils (7) mit der wieder lösbaren Festlegeeinrichtung (13, 15) eine Schlaufenführung (11) im Turm der Windkraftanlage (1, 3) zwecks Kabelnachführung stationär angeordnet ist.

## Claims

1. Guiding device for strand-shaped components, such as energy and/or information-conducting cables (5) of wind turbines (1, 3), consisting of at least one guide part (7) for receiving the components at least in part, it being possible for at least said one guide part (7) to be fastened to a tower segment (3) of the turbine (1, 3) by means of a fixing device (13, 15), the fixing device being responsible for fastening the associated guide part (7) by means of an adhesion device (13), preferably such that it can be detached again, the adhesion device consisting of individual segments (13) extending with a bow-shaped curvature, the respective curve paths of which follow the curve path of the inside wall of the assignable tower segment (3) of the turbine (1, 3), each individual segment (13) comprising a plurality of individual permanent magnets (17) which can be placed on the tower segment (3), and removed again therefrom, by means of a common handle (21), **characterised in that** a band (21) protrudes laterally on either side of the succession of permanent magnets (17) and thus forms the handle (21) which can be grasped in order to detach the individual segment (13) from the adhesion position for the purpose of disassembly, by tilting the permanent magnets (17), in succession, out of the normal position in which they are in contact with the tower segment (3) with a high adhesive force.

2. Guiding device according to claim 1, **characterised in that** the adhesion device (13), being designed such that it can be detached again, allows the guide part (7) to be removed from its operating position.

3. Guiding device according to either claim 1 or claim 2, **characterised in that** the adhesion device (13) comprises at least one magnetic field-generating fixing component, such as a permanent magnet (17), which interacts with a material exhibiting magnetic attraction, such as a steel material, of the assignable tower segment (3) of the turbine (1, 3).

4. Guiding device according to any one of the preceding claims, **characterised in that** the adhesion device (13) comprises at least one compensation device (29, 31), which allows for axial and/or radial compensation movements of the guide part (7) in a specifiable region.

5. Guiding device according to any one of the preceding claims, **characterised in that** the compensation device (29, 31) comprises a plurality of tension springs (29) which are hinged, by one free end thereof, to the handle (21) of the permanent magnets of an individual segment (13), and by the other free end thereof to a common link stool (31) which transfers the common tensile force to a link rope (15), on which the assignable guide part (7) is arranged.

6. Guiding device according to any one of the preceding claims, **characterised in that** three individual segments (13), arranged at a mutual spacing measured in the peripheral direction of the tower segment (3), carry the guide part (7) in the tower segment (3) of the turbine (1, 3) when said guide part is operational.

7. Guiding device according to any one of the preceding claims, **characterised in that**, in addition to the guide part (7) that can be fixed by means of the fixing device (13, 15), further guide parts (9) are arranged between said guide part (7) and a pivotable gondola (3) of the wind turbine (1, 3), and **in that** the further guide parts (9) are designed in the form of cable clamp members.

8. Guiding device according to claim 7, **characterised in that** a loop guide (11) is arranged in a stationary manner in the tower of the wind turbine (1, 3), for the purpose of positioning the cable, below the guide part (7) with the fixing device (13, 15) that can be detached again, on the side remote from the gondola (3).

## Revendications

1. Système de guidage de composants en forme de brin, comme des câbles (5), transportant de l'énergie et/ou acheminant de l'information, d'éoliennes (1, 3), consistant en au moins une partie (7) de guidage pour une réception en partie des composants, dans lequel au moins cette une partie (7) de guidage peut, au moyen d'un dispositif (13, 15) de fixation, être immobilisée sur un segment (3) de tour de l'éolienne (1, 3), le dispositif de fixation effectuant, au moyen d'un dispositif (13) d'adhérence, de préférence d'une façon pouvant être redétachée, l'immobilisation de la partie (7) de guidage associée, le dispositif d'adhérence étant constitué de segments (13) individuels s'étendant en ayant une courbure en forme d'arc, dont le tracé de courbure suit le tracé de courbure de la paroi intérieure du segment (3) de tour pouvant être associé de l'éolienne (3), chaque segment (13) individuel ayant une pluralité d'aimants (17) permanents individuels, qui, au moyen d'une manette (11) commune, peuvent être mis sur le segment (3) de tour et en être retirés, **caractérisé en ce qu'**une ruban (21) fait saillie latéralement des deux côtés de la succession des aimants (17) permanents et forme ainsi la manette (21), qui peut être prise pour détacher, pour un démontage, le segment (13) individuel de la position d'adhérence par le fait que les aimants (17) permanents sont, l'un après l'autre, sortis par basculement de la position normale, dans laquelle ils s'appliquent avec une grande force d'adhérence au segment (3) de tour.

2. Système de guidage suivant la revendication 1, **caractérisé en ce que** le dispositif (13) d'adhérence, en étant conformé de manière redétachable, rend possible de retirer la partie (7) de guidage de sa position de fonctionnement.

3. Système de guidage suivant la revendication 1 ou 2, **caractérisé en ce que** le dispositif (13) d'adhérence a au moins un composant de fixation produisant un champ magnétique, comme un aimant (17) permanent, qui coopère avec un matériau d'attraction magnétique, comme un matériau en acier, du segment (3) de tour pouvant être associé de l'éolienne (1, 3).

4. Système de guidage suivant l'une des revendications précédentes, **caractérisé en ce que** le dispositif (13) d'adhérence a au moins un dispositif (29, 31) de compensation, qui autorise des déplacements axiaux et/ou radiaux de compensation de la partie (7) de guidage dans une plage pouvant être donnée à l'avance.

5. Système de guidage suivant l'une des revendications précédentes, **caractérisé en ce que** le dispositif (29, 31) de compensation a une pluralité de ressorts (29) de traction, qui, par l'une de leurs extrémités libres, sont articulés à la manette (21) des aimants permanents d'un segment (13) individuel et, par leur autre extrémité libre, à une sellette (31) commune d'articulation, qui transmet la force de traction commune à un câble (15) d'articulation, sur lequel est montée la partie (7) de guidage pouvant être associée.

6. Système de guidage suivant l'une des revendications précédentes, **caractérisé en ce que** trois segments (13) individuels, disposés à distance l'un de l'autre mesuré dans la direction du pourtour du segment (3) de tour, portent la partie (7) de guidage dans son état de fonctionnement dans le segment (3) de tour de l'éolienne (1, 3).

7. Système de guidage suivant l'une des revendications précédentes, **caractérisé en ce que**, outre la partie (7) de guidage pouvant être fixée au moyen du dispositif (13, 15) de guidage, d'autres parties (9) de guidage sont disposées entre cette partie (7) de guidage et une nacelle (3) pouvant pivoter de l'éolienne (1, 3) et **en ce que** les autres parties (9) de guidage sont constituées à la manière corde-collier de câble.

8. Système de guidage suivant la revendication 7, **caractérisé en ce que**, du côté loin de la nacelle (3), en dessous de la une partie (7) de guidage ayant le dispositif (13, 15) de fixation pouvant être redétaché, est disposé de manière fixe un guidage (11) à boucle dans la tour de l'éolienne (1, 3) en vue de suivre le câble.
